# EUROPÄISCHE PATENTSCHRIFT

(11) **EP 1 838 998 B1**
(45) Veröffentlichungstag und Bekanntmachung des Hinweises auf die Patenterteilung: **18.02.2009**
(21) Anmeldenummer: 06700483.8
(22) Anmeldetag: 17.01.2006
(51) Int. Cl.: F24C 15/20, B01D 46/10

(54) **LÜFTUNGSGERÄT**
VENTILATOR DEVICE
APPAREIL DE VENTILATION

(30) Priorität: 18.01.2005 CH 662005
(43) Veröffentlichungstag der Anmeldung: 03.10.2007
(73) Patentinhaber: Lufttechnik + Metallbau AG, 5430 Wettingen (CH)
(72) Erfinder: TIEFENAUER, Kurt, CH-5405 Dättwil (CH); FABRICIUS, Finn, DK-3460 Birkerod (DK); ERNST, Beat, CH-5430 Wettingen (CH)
(74) Vertreter: Luchs, Willi
(86) Internationale Anmeldenummer: PCT/EP2006/000347
(87) Internationale Veröffentlichungsnummer: WO 2006/077064

(56) Entgegenhaltungen:
- EP-A- 0 875 278
- DE-U1- 9 105 430
- GB-A- 849 304
- US-A- 4 737 173
- US-A- 5 268 012

## Beschreibung

Die Erfindung betrifft ein Lüftungsgerät gemäss dem Oberbegriff des Anspruches 1.

Lüftungsgeräte bzw. Abzugshauben mit einer Ansaugfiltereinheit, einem in einer Saugkammer angeordneten Saugmotor und mit einer an die Saugkammer angeschlossenen Abluftführung sind in den verschiedensten Ausgestaltungen bekannt und werden insbesondere in Küchen eingebaut. Mittels der oberhalb von Kochfeldern angeordneten Ansaugfiltereinheit, die mit auswechselbaren oder waschbaren Filtern (Vliesfiltern oder Metallfiltern) ausgerüstet ist, wird die angesaugte Luft vom Fett befreit. Die Luft, die nicht geruchsfrei ist und nach wie vor Partikel enthält, wird ins Freie geführt. Der oberhalb der Ansaugfiltereinheit angeordnete Saugmotor verursacht insbesondere beim starken Luftabzug erheblichen Lärm.

Ein Rauchentferner gemäss der Druckschrift US-A-5,268,012 ist mit einem Gehäuse, einer Ansaugöffnung (sucking port), einem durch einen Motor angetriebenen Ventilator (Impeller), einem ringförmigen Filterelement und einem Auslass versehen. Auf der Seite der Ansaugöffnung und dieses mit radial ausgebildeten Leitschaufeln versehenen Ventilators und Motors ist aber weder ein Filter noch irgend eine Schalldämmung vorgesehen, d.h. eine Bedienperson, die sich neben oder unterhalb des Ventilators befindet, besteht weder ein die Luft reinigender Filter noch ein Lärmschutz. Der vom Ventilator und vom Motor entstehende Schall gelangt ungebrochen an die Umgebung. Das ringförmige Filterelement ist eindeutig im Bereich der Druckseite, nämlich dort, wo der Ventilator die Abluft ausstösst, und nicht ansaugseitig angeordnet.

Im Dokument EP-A-0 875 278 ist ein modularer Doppel-Aktivfilter beschrieben, welcher einen flachen Behälter mit mehreren Aufnahmeöffnungen für aktive Kohlengranulate sowie oben einen diese abschliessenden synthetischen Filter aufweist. Dieser eignet sich mitunter für Filteranlagen in Geschäftshäusern oder ähnlichem.

Der vorliegenden Erfindung liegt die Aufgabe zugrunde, ein einfaches Lüftungsgerät zu schaffen, das eine effiziente Lüftung in einem Raum mit wesentlich geringerer Lärmbelastung ermöglicht.

Diese Aufgabe ist erfindungsgemäss durch ein Lüftungsgerät mit den Merkmalen des Anspruches 1 gelöst.

Weitere bevorzugte Ausgestaltungen des erfindungsgemässen Lüftungsgerätes bilden den Gegenstand der abhängigen Ansprüche.

Dadurch, dass der Saugmotor in der Saugkammer erfindungsgemäss von einem eine Luftreinigungsfunktion einerseits und eine schalldämmende Funktion anderseits ausführenden Sorptionsfilter umgeben ist, kann die Luft wirksam von einem Raum abgezogen werden, ohne dass dabei ein störender Lärm entsteht, wobei in die Abluftführung gereinigte, geruchsreduzierte Luft gelangt. Diese kann sogar zurück in den Raum geführt werden, wodurch insbesondere im Winter Energie gespart werden kann.

Die Erfindung sowie weitere Vorteile derselben sind nachfolgend anhand der Zeichnung näher erläutert. Es zeigt:
- Fig. 1: einen schematisch dargestellten Längsschnitt einer erfindungsge- mässen Abzugshaube; und
- Fig. 2: in perspektivischer Darstellung eine mit einem Sorptionsmittel füllbare Kassette für die Abzugshaube nach Fig. 1.

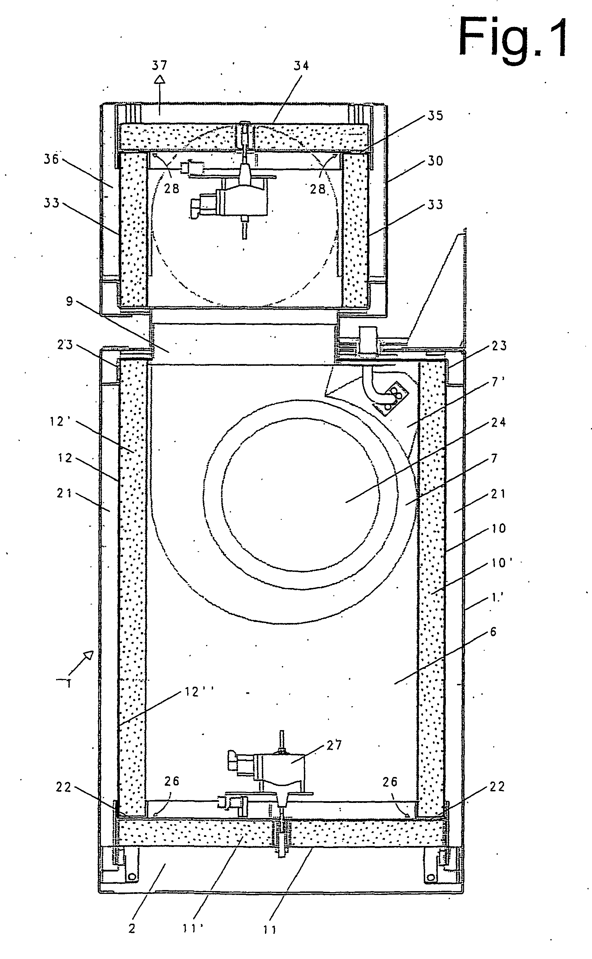

Fig. 1 zeigt als Lüftungsgerät eine Abzugshaube 1, die beispielsweise in einer Küche oberhalb von Kochplatten an einer Decke oder einer Wand befestigt ist, die ein Aussengehäuse 1' und in ihrem unteren Bereich eine Ansaugseite 2 aufweist. In diesem Aussengehäuse 1' befindet sich eine Saugkammer 6 und ein in letzterer angeordneter Saugmotor 7 für das Absaugen der Luft. Der mit einem elektrischen Antrieb 7' versehene Saugmotor 7 ist zum Beispiel zylindrisch ausgebildet und es ist bei ihm stirnseitig je eine Öffnung 24 für das Luftansaugen und auf seiner Oberseite eine Abluftführung 9 vorgesehen.

Erfindungsgemäss ist der Saugmotor 7 in der Saugkammer 6 von einem eine Luftreinigungsfunktion einerseits und eine schalldämmende Funktion anderseits ausführenden Sorptionsfilter umgeben. Dieser Sorptionsfilter ist im vorliegenden Ausführungsbeispiel durch plattenförmige, mit einem Sorptionsmaterial gefüllte Kassetten 10, 11, 12 gebildet, welche den Saugmotor 7 umgeben. Diese Kassetten 10, 11, 12 sind beispielsweise mit Aktivkohlen 10', 11', 12' gefüllt und hierbei luftdurchlässig ausgebildet. Zwischen diesen und dem Aussengehäuse 1' ist ausserdem eine Kammer 21 vorhanden. Zusätzlich können entsprechende Wandverkleidungen 12", wie beispielsweise spezielle Stoffe, als Vorfilter dienen.

Die einzelnen Kassetten 10, 11, 12 sind jeweils in Führungsleisten 22, 23 innerhalb des Gehäuses 1' derart gehalten, dass sie einen Kasten und damit einen den Saugmotor umgebenden geschlossenen Raum bilden, so dass die gewünschte schalldämmende Funktion erfüllt ist, bei der eine neben der Abzugshaube befindliche Person einen laufenden Saugmotor kaum mehr wahrnimmt.

Ansaugseitig ist ferner bei der Kassette 11 ein mit ihr zusammenwirkender, an den Führungsleisten 22 befestigter Stellmotor 27 vorhanden. Dieser Stellmotor 27 kann via eine nicht näher gezeigte Schaltung derart angesteuert werden, dass die Luft seitlich zwischen der durch diesen Stellmotor 27 abgesenkten Kassette 11 und den oberen Kassetten 10, 12 bei den Führungsleisten 22 gemäss dein Pfeil 26 durchgelassen, und es somit wie einen Kurzschluss herbeiführt, bei dem die abgesogene Luft mehrheitlich direkt zum Saugmotor und nicht durch die Filter strömt. Dieser Stellmotor 27 wird mit Vorteil als Bypass benutzt, wenn kurzzeitig ein starker Dunst erzeugt wird, beispielsweise beim Anbraten von Fleisch. Dabei wird die höchste Stufe der Absaugleistung eingeschaltet und die verschmutzte Luft direkt nach aussen abgeleitet. Damit kann zum einen eine höhere Abzugsleistung erzielt werden und gleichsam werden die Filter geschont. Hingegen bei Normalbetrieb der Abzugshaube 1 ist die untere Kassette 11 and die seitlichen Kassetten 10, 12 angedrückt und die Luft wird ausschliesslich durch die Filter geleitet.

Vorzugsweise ist bei der Abluftführung 9 ähnlich wie bei der Ansaugseite ein Aufsatzgehäuse 30 mit darin eingesetzten, die Aktivkohle enthaltenden Kassetten 33, 34 vorgesehen, welche wiederum in Führungsleisten 35 gehalten sind. Zwischen dem Aufsatzgehäuse 30 und den Kassetten ist eine diese ummantelnde Kammer 36 zugeordnet. Die vom Absaugmotor 7 transportierte Luft wird durch diese Kassetten in die Kammern 36 an einen Auslass 37 geführt, bei welchem die gereinigte Luft entweder nach aussen oder aber als Umluft zurück in den Raum geleitet wird. Es ist wiederum in der oberen Kassette 34 ein Stellmotor 27 analog demjenigen bei der Kassette 11 installiert, welcher vorteilhaft gleichzeitig mit dem unteren Stell-motor 27 geschaltet wird und die entsprechenden Kassetten 11, 34 verstellt werden, so dass bei geöffneten Stellungen ein schneller Durchlass der Luft gemäss Pfeil 28 erfolgen kann.

Dank der schalldämmenden Wirkung des Sorptionsfilters 10, 11, 12 kann die erfindungsgemässe Abzugshaube 1 auch zum Beispiel in der Nacht eingeschaltet bleiben und eine Luftreinigung bewirken. Die Luft könnte hierbei auch in den Raum zurückgeführt und in einen Umluftbetrieb gesetzt und damit praktisch wie eine Umlufthaube bzw. ein Lüftungsgerät verwendet werden.

Auch könnte die Abzugshaube derart ausgestattet sein, dass die Abluft im Sinne einer Sekundärzuleitung zum Beispiel durch einen Verbindungsschacht aus einem anderen Raum aufgenommen und gereinigt wird. Es wäre dann ein in die Kammer 36 führendes Rohr oder dergleichen vorzusehen, und zudem eine Verbindungsleitung von dieser Kammer 36 in die Kammer 21, so dass die Abluft durch die Filter entweder zum Auslass 37 oder zurück in den Raum geführt würde.

Die Kassetten 10, 11, 12 mit dem Sorptionsmaterial können auch auswechselbar im Gehäuse montierbar sein. Damit lassen sich Filter nach einer gewissen Zeit auswechseln.

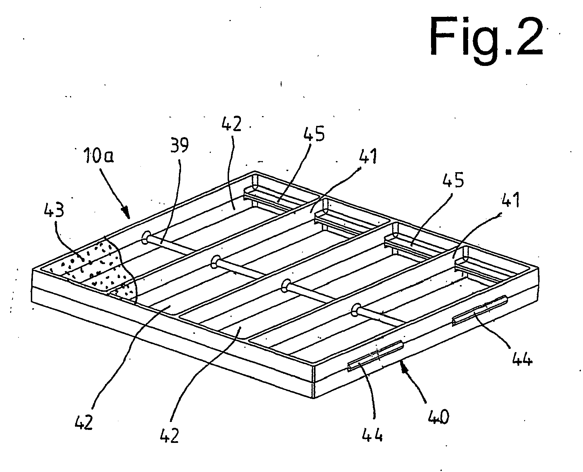

In Fig. 2 ist ein Ausführungsbeispiel einer auswechselbaren Kassette 10a dargestellt, bei der es sich um eine der den Saugmotor 7 seitlich umgebenden Kassetten handelt. Die Kassette 10a weist einen rechteckförmigen Rahmen 40 auf, der durch mehrere parallele Wandteile 41 in eine Anzahl von mit dem Sorptionsmaterial, z.B. mit Aktivkohle, füllbaren Abteilen 42 unterteilt ist. Eine Querstrebe 39 verbindet die Wandteile 41 miteinander und mit dem Rahmen 40. Frontal werden die Abteile 42 bzw. der Rahmen beispielsweise durch ein Filtervlies 43 abgedeckt. Am Rahmen 40 sind seitliche Führungselemente 44 angebracht, mit denen die Kassette 10a in entsprechende Führungsleisten des Gehäuses einführbar ist, derart, dass sich bei der eingesetzten Kassette 10a die Abteile 42 in Richtung von der Ansaugeseite 2 zur Abluftführung 9 hin erstrecken. Dies erlaubt eine gleichmässige Verteilung des Sorptionsmaterials bzw. der Aktivkohle.

Der Rahmen 40 ist zumindest auf der der Abluftführung 9 zugewandten, oberen Seite mit Rippen 45 versehen, die in die Abteile 42 hineinragen bzw. die Wandteile 41 verbinden, wodurch eine Art Blende gebildet ist, die verhindert, dass bei schüttelbedingtem Absinken des Sorptionsmaterials bzw. der Aktivkohle Spalten entstehen, durch welche die Luft ungefiltert passieren kann. Vorzugsweise sind auch auf der unteren Ansaugeseite des Rahmens 40 die Rippen 45 vorhanden, so dass die Kassette 10a beidseitig in das Gehäuse einschiebbar ist.

Die Erfindung ist mit den obigen Ausführungsbeispielen ausreichend dargetan. Selbstverständlich könnte sie noch in anderen Varianten ausgeführt sein. So könnte der Saugmotor 7 zusammen mit dem Sorptionsfilter beispielsweise auch in einer Abzugshaube enthalten sein, welche an einer Wand montiert ist. Der Saugmotor 7 wäre dann wiederum in analoger Weise von dem Sorptionsfilter 10 derart umfasst, dass die Luft durch den Filter angesaugt und gleichsam die bezweckte Schalldämmung erreicht wird.

Bei der Ansaugseite 2 könnte zusätzlich ein herkömmlicher wegnehmbarer Metallfilter oder ähnlichem angeordnet sein, mit welchem die groben Fettrückstände aufgenommen würden.

Anstelle von Kassetten könnte aber auch eine kastenartige, den Saugmotor umgebende Filtereinheit mit Sorptionsmaterial gefüllten Wandungen im Aussengehäuse eingebaut sein.

Auch wäre eine Spülung (Regeneration) der Sorptionsfilter möglich, indem frische Luft von aussen im umgekehrten Sinne durch die Filter gepumpt würde.

Selbstverständlich eignet sich dieses Lüftungsgerät auch für andere Zwecke als für Abzugs- oder Umlufthauben. So könnte es als Reinigungsaggregat für andere Anwendungen benutzt werden.

Ausserhalb der Kassetten könnte je ein Filtervlies als Hülle, Einlage oder Vorfilter für das Sorptionsmaterial eingesetzt sein, dies insbesondere zur Schonung der Sorptionsfilter.

## Patentansprüche

1. Lüftungsgerät, mit einer Ansaugseite (2), einem in einer Saugkammer (6) angeordneten Saugmotor (7) und mit einer an die Saugkammer (6) angeschlossenen Abluftführung (9), **dadurch gekennzeichnet, dass**
der Saugmotor (7) in der Saugkammer (6) von einem eine Luftreinigungsfunktion einerseits und eine schalldämmende Funktion andererseits ausführenden Sorptionsfilter saugseitig umgeben ist.

2. Lüftungsgerät nach Anspruch 1, **dadurch gekennzeichnet, dass** der Sorptionsfilter aus plattenförmigen Kassetten (10, 11, 12; 10a) besteht, welche jeweils mit Aktivkohle gefüllt sind.

3. Lüftungsgerät nach Anspruch 2, **dadurch gekennzeichnet, dass** die einzelnen Kassetten (10, 11, 12; 10a) jeweils in Führungsleisten (22, 23) innerhalb des Gehäuses (1') derart gehalten sind, dass sie einen Kasten und damit einen den Saugmotor (7) umgebenden geschlossenen Raum bilden.

4. Lüftungsgerät nach Anspruch 3, **dadurch gekennzeichnet, dass** zwischen den seitlichen Kassetten (10, 12; 10a) und einem Aussengehäuse (1') eine erste Kammer (21) vorhanden ist, durch welche die Luft von der Ansaugseite (2) her zu den seitlichen Kassetten (10, 12; 10a) zugeführt wird.

5. Lüftungsgerät nach einem der Ansprüche 1 bis 4, **dadurch gekennzeichnet, dass** die über die Filter der Ansaugseite (2) aus einem Raum in die Saugkammer (6) angesaugte, über den Sorptionsfilter in die Abluftführung (9) geleitete Primärluft aus der Abluftführung (9) in den Raum zurückführbar ist.

6. Lüftungsgerät nach einem der Ansprüche 2 bis 5, **dadurch gekennzeichnet, dass** ansaugseitig bei einer unteren Kassette (11) ein mit ihr zusammenwirkender Stellmotor (27) vorhanden ist, welcher derart angesteuert wird, dass die Luft seitlich zwischen der durch diesen Stellmotor (27) abgesenkten unteren Kassette (11) und den seitlichen Kassetten (10, 12; 10a) durchgelassen und es somit einen Kurzschluss herbeiführt, bei dem die abgesogene Luft mehrheitlich direkt zum Saugmotor und nicht durch die Filter strömt.

7. Lüftungsgerät nach einem der Ansprüche 1 bis 6, **dadurch gekennzeichnet, dass** bei der Abluftführung (9) ein Aufsatzgehäuse (30) mit darin eingesetzten, das Sorptionsmaterial enthaltenden Kassetten (33, 34) vorgesehen ist, wobei zwischen dem Aufsatzgehäuse (30) und den Kassetten (33, 34) eine zweite Kammer (36) zugeordnet ist, wobei die vom Absaugmotor (7) transportierte Luft durch diese Kassetten (33, 34) in die zweite Kammer (36) durch einen Auslass (37) ins Freie oder zurück in den Raum geführt wird.

8. Lüftungsgerät nach Anspruch 7, **dadurch gekennzeichnet, dass** Raumluft sekundär in die vom Aussengehäuse (1') umschlossene erste Kammer (21) oder in die vom Aufsatzgehäuse (30) umschlossene zweite Kammer (36) und mittels eines Verbindungsschachtes in die erstgenannte Kammer (21) angesaugt und gereinigt durch den Saugmotor wieder zur Abluftführung (9) bzw. zum Auslass (37) ins Freie oder zurück in den Raum bringbar ist.

9. Lüftungsgerät nach einem der Ansprüche 1 bis 8, **dadurch gekennzeichnet, dass** eine Spülung bzw. Regeneration der Sorptionsfilter vorgesehen ist, bei der frische Luft von aussen im umgekehrten Sinne durch die Filter gepumpt wird.

10. Lüftungsgerät nach einem der Ansprüche 1 bis 9, **dadurch gekennzeichnet, dass** ein Filtervlies als Hülle, Einlage oder Vorfilter für das Sorptionsmaterial eingesetzt ist.

11. Kassette für ein Lüftungsgerät nach einem der Ansprüche 1 bis 10, **dadurch gekennzeichnet, dass** die Kassette (10, 11, 12; 10a) mit einem luftdurchlässigen schalldämmenden Material gefüllt ist.

12. Kassette nach Anspruch 11, **dadurch gekennzeichnet, dass** die Kassette (10, 11, 12; 10a) einen Rahmen (40) aufweist, der durch mehrere parallele Wandteile (41) in eine Anzahl von mit der Aktivkohle füllbaren Abteilen (42) unterteilt ist, derart, dass diese Wandteile (41) im eingesetzten Zustand der Kassette sich vertikal von der Ansaugeseite (2) zur Abluftführung (9) des Lüftungsgerätes hin erstrecken.

13. Kassette nach Anspruch 12, **dadurch gekennzeichnet, dass** der Rahmen (40) zumindest auf der der Abluftführung (9) zugewandten oberen Seite mit Rippen (45) versehen ist, die in die Abteile (42) hineinragen bzw. die Wandteile (41) verbinden.

## Claims

1. A ventilator device with an inlet side (2), a suction motor (7) arranged in a suction chamber (6) and an exhaust path (9) connected to the suction chamber (6), **characterised in that**
the suction motor (7) is enclosed on the suction side in the suction chamber (6) by an absorption filter performing on the one hand an air-purifying function and on the other hand a noise insulation function.

2. The ventilator device according to Claim 1, **characterised in that** the absorption filter comprises planar cassettes (10, 11, 12: 10a) each filled with active charcoal.

3. The ventilator device according to Claim 2, **characterised in that** the individual cassettes (10, 11, 12; 10a) are respectively held in guide rails (22, 23) within the housing (1') such that they form a box and so form a closed space enclosing the suction motor (7).

4. The ventilator device according to Claim 3, **characterised in that** between the side cassettes (10, 12; 10a) and an outer housing (1') a first chamber (21) is provided through which the air from the inlet side (2) is conveyed to the side cassettes (10, 12; 10a).

5. The ventilator device according to any of Claims 1 to 4, **characterised in that** the primary air sucked via the filters of the inlet side (2) from a space into the suction chamber (6), conveyed via the absorption filter into the exhaust path (9), can be conveyed back from the exhaust path (9) into the space.

6. The ventilator device according to any of Claims 2 to 5, **characterised in that** on the inlet side with a lower cassette (11) a servomotor (27) interacting with the latter is provided which is controlled such that the air passes through to the side between the lower cassette (11) lowered by this servomotor (27) and the side cassettes (10, 12; 10a) and so brings about a short circuit with which the majority of the drawn off air flows directly to the suction motor and not through the filters.

7. The ventilator device according to any of Claims 1 to 6, **characterised in that** with the exhaust path (9) an upper housing (30) with cassettes (33, 34) placed inside the latter and containing the absorption material is provided, between the upper housing (30) and the cassettes (33, 34) a second chamber (36) being allocated, the air conveyed by the suction motor (7) being guided through these cassettes (33, 34) into the second chamber (36) through an outlet (37) into the open or back into the space.

8. The ventilator device according to Claim 7, **characterised in that** ambient air can secondarily be sucked into the first chamber (21) enclosed by the outer housing (1') or into the second chamber (36) enclosed by the upper housing (30) and by means of a connection shaft into the first mentioned chamber (21) and, cleaned by the suction motor, can be brought back to the exhaust path (9) or to the outlet (37) into the open or back into the space.

9. The ventilator device according to any of Claims 1 to 8, **characterised in that** flushing or regeneration of the absorption filters is provided with which fresh air from the outside is pumped through the filters in the opposite direction.

10. The ventilator device according to any of Claims 1 to 9, **characterised in that** a filter fleece is used as a covering, insertion or pre-filter for the absorption material.

11. A cassette for a ventilator device according to any of Claims 1 to 10, **characterised in that** the cassette (10, 11, 12; 10a) is filled with an air-permeable, noise-insulating material.

12. The cassette according to Claim 11, **characterised in that** the cassette (10, 11, 12; 10a) has a frame (40) which is divided by a number of parallel wall parts (41) into a number of sections (42) fillable with the active charcoal, such that in the inserted state of the cassette these wall parts (41) extend vertically from the inlet side (2) to the exhaust path (9) of the ventilator device.

13. The cassette according to Claim 12, **characterised in that** the frame (40) is provided at least on the upper side facing towards the exhaust path (9) with ribs (45) which project into the sections (42) and connect the wall parts (41).

## Revendications

1. Appareil de ventilation comprenant un côté (2) d'aspiration, un moteur (7) d'aspiration disposé dans une chambre (6) d'aspiration et une évacuation (9) d'air raccordée à la chambre (6) d'aspiration, **caractérisé en ce que**
le moteur (7) d'aspiration dans la chambre (6) d'aspiration est entouré côté aspiration d'un filtre de sorption ayant d'une part une fonction d'épuration de l'air et d'autre part une fonction d'atténuation du bruit.

2. Appareil de ventilation suivant la revendication 1, **caractérisé en ce que** le filtre de sorption est constitué de cassettes (10, 11, 12, 10a) en forme de plaques, garnies respectivement de charbon actif.

3. Appareil de ventilation suivant la revendication 2, **caractérisé en ce que** les diverses cassettes (10, 11, 12, 10a) sont maintenues respectivement dans des réglettes (22, 23) de guidage à l'intérieur du boîtier (1) de façon à former un caisson et ainsi un espace fermé entourant le moteur (7) d'aspiration.

4. Appareil de ventilation suivant la revendication 3, **caractérisé en ce qu'**entre les cassettes (10, 12, 10a) latérales et un boîtier (1') extérieur, il y a une première chambre (21) dans laquelle l'air est envoyé à partir du côté (2) d'aspiration aux cassettes (10, 12, 10a) latérales.

5. Appareil de ventilation suivant l'une des revendications 1 à 4, **caractérisé en ce que** l'air primaire aspiré, par le filtre du côté (2) d'aspiration, d'un espace dans la chambre (6) d'aspiration et envoyé par le filtre d'aspiration à l'évacuation (9) d'air, peut être retourné de l'évacuation (9) d'air à l'espace.

6. Appareil de ventilation suivant l'une des revendications 2 à 5, **caractérisé en ce que** du côté aspiration il y a, pour une cassette (11) inférieure, un moteur (27) de réglage qui coopère avec elle et qui est commandé de façon à ce que l'air passe latéralement entre la cassette (11) inférieure abaissée par ce moteur (27) de réglage et les cassettes (10, 12, 10a) latérales et provoque ainsi un court-circuit, dans lequel l'air retiré passe d'une façon plus unitaire directement au moteur d'aspiration sans traverser le filtre.

7. Appareil de ventilation suivant l'une des revendications 1 à 6, **caractérisé en ce que** pour l'évacuation (9) d'un flux d'air, il est prévu une coiffe (30) dans laquelle sont insérées des cassettes (33, 34) comprenant la matière de sorption, une deuxième chambre (36) étant ajoutée entre la coiffe (30) et les cassettes (33, 34), l'air transporté par le moteur (7) d'aspiration étant guidé par une sortie (37) à l'air libre ou retournant dans l'espace en traversant ces cassettes (33, 34) pour aller dans la deuxième chambre (36).

8. Appareil de ventilation suivant la revendication 7, **caractérisé en ce que** l'air de l'espace est aspiré de manière secondaire dans la première chambre (21) entourée par le boîtier (1') extérieur ou dans la deuxième chambre (36) entourée par la coiffe (30) et au moyen d'un puits de liaison dans la chambre (21) mentionnée en premier et épuré peut être envoyé à l'air libre ou retourné à l'espace par le moteur d'aspiration, à nouveau vers l'évacuation (9) d'air ou la sortie (37).

9. Appareil de ventilation suivant l'une des revendications 1 à 8, **caractérisé en ce qu'**il est prévu un lavage ou une régénération du filtre de sorption, par lequel de l'air frais est pompé de l'extérieur en sens inverse dans le filtre.

10. Appareil de ventilation suivant l'une des revendications 1 à 9, **caractérisé en ce que** l'on utilise un tissu filtrant comme enveloppe, insert ou préfiltre pour la matière de sorption.

11. Cassette pour un appareil de ventilation suivant l'une des revendications 1 à 10, **caractérisée en ce que** la cassette (10, 11, 12, 10a) est garnie d'une matière perméable à l'air et atténuant le bruit.

12. Cassette suivant la revendication 11, **caractérisée en ce que** la cassette (10, 11, 12, 10a) a un cadre (40), qui est subdivisé par plusieurs parties (41) de paroi parallèles en un certain nombre de compartiments (42) pouvant être garnis de charbon actif, de façon à ce que ces parties (41) de paroi s'étendent, lorsque la cassette est insérée verticalement, du côté (2) d'aspiration à l'évacuation (9) d'air de l'appareil de ventilation.

13. Cassette suivant la revendication 12, **caractérisée en ce que** le cadre (40) est pourvu, au moins du côté supérieur tourné vers l'évacuation (9) d'air, de nervures (45) qui pénètrent dans les compartiments (42) ou relient les parties (41) de paroi.
